# EUROPÄISCHE PATENTSCHRIFT

(11) **EP 3 789 667 B1**
(45) Veröffentlichungstag und Bekanntmachung des Hinweises auf die Patenterteilung: **17.04.2024**
(21) Anmeldenummer: 20193410.6
(22) Anmeldetag: 28.08.2020
(51) Int. Cl.: F21V 8/00, G02B 1/04

(54) **SEITENEMITTIERENDER LICHTLEITER UND VERFAHREN ZU DESSEN HERSTELLUNG**
SIDE-EMITTING LIGHT GUIDE AND METHOD FOR PRODUCING THE SAME
CONDUCTEUR DE LUMIÈRE À ÉMISSION LATÉRALE ET SON PROCÉDÉ DE FABRICATION

(30) Priorität: 04.09.2019 DE 102019123693
(43) Veröffentlichungstag der Anmeldung: 10.03.2021
(73) Patentinhaber: SCHOTT AG, 55122 Mainz (DE)
(72) Erfinder: Kappel, Markus, 55595 Roxheim (DE); HOPPE, Bernd, 55218 Ingelheim (DE); RUSSERT, Hubertus, 55270 Jugenheim (DE); Willmes, Lothar, 65375 Oestrich-Winkel (DE)
(74) Vertreter: Blumbach · Zinngrebe Patentanwälte PartG mbB

(56) Entgegenhaltungen:
- DE-A1-102017 122 756
- DE-U1-202017 107 616
- JP-A- H06 331 830
- US-A1- 2018 369 432
- US-B1- 6 169 836

## Beschreibung

Die Erfindung betrifft allgemein das technische Gebiet lichtemittierender Elemente. Im Speziellen betrifft die Erfindung die Verwendung von Lichtleitern in Beleuchtungs- oder Anzeigevorrichtungen.

Für Beleuchtungs- oder Anzeigezwecke kann es gewünscht sein, linienförmige Lichtquellen einzusetzen. Als eine solche Lichtquelle kann ein Lichtemitter mit einem daran gekoppelten seitenemittierenden Lichtleiter dienen. Eine solche Anordnung ist unter anderem im Hinblick auf eine raumsparende Bauweise und auch eine hohe Robustheit einer Anordnung aus vielen kleinen nebeneinander angeordneten Emittern, wie etwa einer LED-Kette überlegen. So kann es bei einer solchen Kette aufgrund der hohen Anzahl von Komponenten schnell zum Ausfall einzelner Leuchtdioden kommen, die sofort störend ins Auge fällt.

Eine andere Möglichkeit zur Schaffung linienförmiger Lichtquellen sind seitenemittierende Lichtleiter. Einige Beispiele sind in US 2018/369432 A1, US 6 169 836 B1 und DE 20 2017 107616 U1 beschrieben.

Bei diesen Lichtleitern sind an einem oder beiden Enden Lichtemitter angeschlossen, welche Licht in den Lichtleiter einkoppeln. Im Lichtleiter sind Streuelemente verteilt, welche das im Lichtleiter geleitete Licht herausstreuen. Diese Lichtquellen schaffen eine sehr homogene Beleuchtung. Allerdings ist der gesamte Lichtstrom durch die vom Lichtemitter bereitgestellte Intensität begrenzt.

Auch wenn der Lichtleiter für das Auge homogen leuchtet, besteht ein Problem bei einem nicht geradlinigen Verlauf des Lichtleiters. Wird ein Lichtleiter aus Glas verwendet, ist dieser bei hinreichender Dicke im Allgemeinen nicht biegsam genug. Zwar sind Lichtleiter aus Kunststoff bekannt, aber die bekannten Lösungen weisen eine nur geringe Leuchtdichte auf. Zudem kann ein Problem beim Biegen des Lichtleiters entstehen. Wird der Lichtleiter gebogen, z.B. bei der Befestigung durch Clips am Untergrund, kann sich die streuende Mantelschicht ablösen oder wird durch die Biegung am Außenbereich gestreckt und damit dünner und im Bogeninneren gestaucht, so dass Falten entstehen können. Dabei können Luftspalte zwischen streuendem Cladding und lichtleitendem Kern entstehen, welche auch beim wieder ausrichten bestehen bleiben. Diese führen dann zu einer lokal unterschiedlichen Auskopplung des Lichts und damit zu einer inhomogenen Lichtintensität.

Der Erfindung liegt mithin die Aufgabe zugrunde, eine Lichtquelle mit linienförmiger Erscheinung bereitzustellen, die einen flexiblen Lichtleiter aufweist, der eine homogene Lichtabstrahlung mit hoher Leuchtdichte aufweist. Diese Aufgabe wird durch den Gegenstand der unabhängigen Ansprüche gelöst. Vorteilhafte Ausgestaltungen sind in den abhängigen Ansprüchen angegeben. Demgemäß sieht die Erfindung einen seitenemittierenden Lichtleiter vor, umfassend einen Kern, in welchem eine Seele verläuft, sowie eine den Kern umgebende, transparente Ummantelung, wobei der Kern und die Ummantelung aus transparentem Kunststoff geformt sind, wobei der Kern einen höheren Brechungsindex aufweist, als die Ummantelung, und wobei die Seele lichtablenkend, insbesondere lichtreflektierend und/oder lichtstreuend, ausgebildet ist, um im Lichtleiter geführtes Licht zu streuen und durch die Ummantelung hindurch nach außen abzugeben.

Dabei ist die Streulänge der Seele vorzugsweise höchstens doppelt so groß, besonders bevorzugt höchstens so groß wie die maximale Querabmessung der Seele. Im bevorzugten Fall einer Seele mit rundem Querschnitt ist die maximale Querabmessung durch den Durchmesser der Seele gegeben. Bei einer ovalen Seele wäre die maximale Querabmessung als weiteres Beispiel die Ausdehnung entlang der Hauptachse des elliptischen Querschnitts. Die Streulänge ist definiert als die Länge, bei welcher durch Streuung die ursprüngliche Intensität des Lichts in Einstrahlrichtung auf einen Faktor 1/e abgesunken ist. Für die Streulänge ls und die Lichtintensität I(x) entlang einer Strecke in x-Richtung im Material der Seele gilt bei vernachlässigbarer Absorption demnach I(x) = I₀·exp{x/ls}, wobei I₀ die ursprüngliche Lichtintensität beim Auftreffen auf die Seele bezeichnet. Diese für den Fall eines mit einer vernachlässigbaren Absorption ausgebildeten Materials stellt dabei einen Grenzwert dar, für den Fall der nicht-vernachlässigbaren Absorption des Materials ist die Streulänge kleiner als nach der vorstehenden Gleichung bestimmt. Nicht vernachlässigbar ist die Absorption insbesondere für metallische Materialien, welche insbesondere im Bereich des sichtbaren Lichts von 380 nm bis 780 nm stark absorbieren. Für diese kann näherungsweise die Streulänge bestimmt werden wie vorstehend für Materialien mit vernachlässigbarer Absorption, mit der Maßgabe, dass der auf diese Weise ermittelte Wert zu groß ist und daher die tatsächliche Streulänge geringer sein wird. Dadurch, dass die Streulänge besonders bevorzugt höchstens so groß ist wie die Querabmessung der Seele, erscheint die Seele bei seitlicher Betrachtung des Lichtleiters im Wesentlichen undurchsichtig, also im sichtbaren Spektralbereich im Wesentlichen opak. Für das im Kern geleitete Licht bedeutet dies andererseits, dass auf die Seele treffendes Licht mit hoher Wahrscheinlichkeit und Intensität gestreut und anschließend aus dem Lichtleiter austritt. Die Seele erscheint damit im Betrieb als hell leuchtendes linienförmiges Element.

Die Seele ist vorzugsweise deutlich dünner als der Lichtleiter, um eine hohe Leuchtdichte zu erreichen. Insbesondere ist in einer bevorzugten Ausführungsform vorgesehen, dass die Seele eine Querschnittfläche gemessen in Richtung senkrecht zur Längsrichtung des Lichtleiters aufweist, die um mindestens einen Faktor 4, vorzugsweise mindestens einen Faktor 20 kleiner ist als die von der Außenkontur der transparenten Ummantelung eingeschlossene Querschnittfläche von mindestens 0,7 mm². Bei einer zu dünnen Seele im Verhältnis zur Dicke des Lichtleiters sinkt die absolute Helligkeit allerdings wiederum ab. Daher ist es gemäß noch einer Weiterbildung günstig, wenn die Seele eine Querschnittfläche gemessen in Richtung senkrecht zur Längsrichtung des Lichtleiters aufweist, die um höchstens einen Faktor 2500 kleiner ist als die Querschnittfläche des Kerns.

Anders als bei bekannten seitenemittierenden Kunststoff-Lichtleitern sind demgemäß die lichtstreuenden Strukturen konzentriert innerhalb des lichtleitenden Kerns angeordnet und bildet bevorzugt einen zumindest teil oder abschnittsweise diskreten Bereich. Da die lichtstreuenden Strukturen diejenigen Teile des Lichtleiters sind, welche leuchtend erscheinen und von denen aus Licht nach außen emittiert wird, weist der Lichtleiter gemäß dieser Offenbarung eine sehr kleine Abstrahlfläche und damit eine sehr hohe Leuchtdichte auf. Auch das Problem, dass es zwischen den Kunststoffschichten eines Kunststoff-Lichtleiters bei einer Biegung zum Ablösen und damit zu einer lokalen Änderung der Lichtabstrahlung kommen kann, wird bei dem hier beschriebenen Lichtleiter dadurch umgangen, dass die Lichtabstrahlung von einer Seele im Inneren des Kerns ausgeht, die nahe bei oder auf der neutralen Faser liegt. Die lichtreuenden Strukturen sind damit von einer Biegung des Lichtleiters kaum oder gar nicht beeinflusst, selbst wenn es zu einer Änderung der Struktur der Kunststoffe oder zu geometrischen und/oder mechanischen Veränderungen beim Biegen kommt.

Der Lichtleiter kann in besonders vorteilhafter Weise einfach durch Coextrusion hergestellt werden. Dabei kann die Coextrusion um eine vorher vorhandene Seele herum erfolgen. Ebenso können die lichtstreuenden Elemente der Seele bei der Coextrusion dem Kunststoff des Kerns hinzugefügt werden, oder es wird für die Seele ein zusätzlicher Kunststoff mit lichtstreuenden Elementen, insbesondere Partikeln verwendet, der zusammen mit den Kunststoffen von Kern und Mantel coextrudiert wird. Als lichtstreuende Elemente kommen neben Partikeln auch Filamente und vor allem auch Blasen in Betracht. Die Geometrie solcher Partikel, Filamente oder Blasen kann insbesondere auch unrund, unregelmäßig sein und/oder unterschiedliche Ausdehnungen der räumlichen Hauptachsen aufweisen.

Die Erfindung wird nachfolgend genauer und anhand der Figuren beschrieben.

### Kurzbeschreibung der Figuren

- Fig. 1: zeigt eine Lichtquelle mit einem seitenemittierenden Lichtleiter.
- Die Fig. 2 und Fig. 3: zeigen Querschnittansichten eines Lichtleiters.
- Fig. 4: zeigt eine Extrusionsdüse zur Herstellung des Lichtleiters.
- Fig. 5: zeigt eine Variante eines Lichtleiters mit partikelhaltigen Kunststoffen.
- Fig. 6: zeigt einen Strahlengang im Lichtleiter.
- Fig. 7: zeigt eine Ausführungsform einer Lichtquelle, bei welchem das Licht über einen weiteren Lichtleiter eingekoppelt wird.
- Fig. 8 und Fig. 9: zeigen Ausführungsformen mit mehreren Kernen.
- Fig. 10: ist ein Ausführungsbeispiel mit verschiedenen zusätzlichen Funktionselementen.

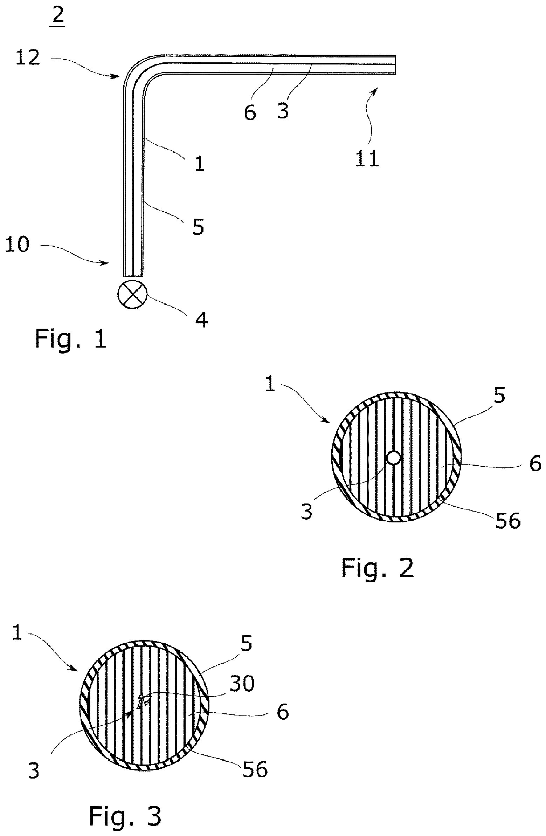

In Fig. 1 ist schematisch eine Lichtquelle 2 mit einem Lichtleiter 1 gemäß dieser Offenbarung dargestellt. Die Lichtquelle 2 umfasst einen Lichtemitter 4, welcher an einem Ende 10 des Lichtleiters 1 optisch mit dem Kern 6 gekoppelt ist, um in den Lichtleiter 1 Licht einzukoppeln. Allgemein, ohne Beschränkung auf das dargestellte Ausführungsbeispiel werden Halbleiter-Lichtemitter für die Lichtquelle 2 bevorzugt, wobei je nach Anwendungsgebiet auch insbesondere Laser anderer Bauformen, bspw. Gas-, Festkörper-, Excimer- oder Faserlaser, Anwendung finden können. Diese können Leuchtdioden oder Halbleiterlaser umfassen. Auf diese Weise können auch mehrere Lichtemitter mit unterschiedlichen Farben gekoppelt sein, um einen Beleuchtung zu erhalten, deren Lichtfarbe einstellbar ist. Anders als in Fig. 1 dargestellt können auch an beiden Enden 10, 11 des Lichtleiters 1 Lichtemitter 4 angeordnet sein, um deren Licht in die Fasern 7 einzukoppeln. Wie dargestellt verläuft die Seele 3 innerhalb des Kerns 6, der wiederum von der transparenten Ummantelung 6 umgeben ist.

Da sowohl der Kern 6, als auch die Ummantelung 5 aus Kunststoff sind, weist der Lichtleiter 1 eine hohe Flexibilität auf, so dass dieser in einfacher Weise mit einer Biegung 12 verlegt und fixiert werden kann. Im dargestellten Beispiel ist der Lichtleiter 1 beispielhaft mit einer um 90° umlenkenden Biegung 12 versehen worden. Allgemein, ohne Beschränkung auf das schematische Beispiel ist in einer Ausführungsform vorgesehen, dass die Lichtquelle 2 einen mit einer Biegung verlaufenden Lichtleiter 1 umfasst, wobei der Biegeradius mindestens dem zehnfachen des Lichtleiter-Durchmessers entspricht. Bis zu diesem Wert sind Lichtverluste und Veränderungen des Lichtleiters durch die Biegung im Allgemeinen nicht auffällig.

Fig. 2 zeigt eine Querschnittansicht durch eine Ausführungsform eines Lichtleiters 1. Wie dargestellt verläuft die Seele 3 im Inneren des Kerns 6. Ohne Beschränkung auf das spezielle Ausführungsbeispiel ist es bevorzugt, wenn die Seele 3 mittig im Kern 6 verläuft. Anders als dargestellt können auch zwei oder mehr Seelen 3 in einem Kern 6 verlaufen. Dadurch, dass der Kern 6 einen höheren Brechungsindex als die Ummantelung 5 aufweist, wird das im Kern 6 geführte Licht an der Grenzfläche 56 zwischen Kern 6 und Ummantelung 5 totalreflektiert. Für die lichtstreuende Seele 3 sind ohne Beschränkung auf die dargestellte Ausführungsform viele Alternativen möglich. Es ist dabei auch denkbar, dass die Seele 3 nicht aus einem Kunststoff gebildet wird. So ist gemäß einer Ausführungsform vorgesehen, dass die Seele 3 ein Seil oder einen Draht umfasst. Das Seil kann auch als Litze oder Faden bezeichnet werden. Das Seil oder der Draht oder der Faden können dabei aus Kunststoff, Glas oder auch einem anderen Material, beispielsweise Metall oder Naturfasern gefertigt sein und umfassen zumindest eine Litze oder Faser. Auch in diesem Fall ist eine Coextrusion bei besonders bevorzugten Ausführungsformen möglich, insbesondere kann vorgesehen sein, dass bei der Coextrusion die lichtstreuenden Elemente der Seele bei der Coextrusion dem Kunststoff des Kerns hinzugefügt werden, oder es wird für die Seele ein zusätzlicher Kunststoff mit lichtstreuenden Elementen, insbesondere Partikeln verwendet, der zusammen mit den Kunststoffen von Kern und Mantel coextrudiert wird und sich in Form eines Drahts oder Seils oder Fadens, also faden-, linien- oder faserförmig entlang der Längsachse des Lichtleiters 1, ausbildet. Im Falle von Glas als Material einer Seele 3 sind bspw. sogenannte Weiß- oder Milchgläser oder andere, insb. transluzente oder opake Farbgläser denkbar. Bei mehreren Litzen oder Fasern können diese lose nebeneinander angeordnet oder miteinander verbunden, verdrillt, verflochten oder verwoben sein. Die Seele 3 kann dementsprechend im Wesentlichen glatt oder bspw. entsprechend ihres Aufbaus rau oder strukturiert und oder teil- oder abschnittsweise ein- oder mehrfarbig ausgebildet sein. Die Strukturierung der Oberfläche der Seele bietet zudem die Möglichkeit, das Streuverhalten und die Streulänge in einem großen Bereich von mehr als 50% der gesamten Streuung einstellen zu können. Die Ausführungsform mit einer Seele 3 in Form eines Drahts oder Seils kann besonders vorteilhaft sein, da diese Seele dem Lichtleiter 1 gleichzeitig eine hohe Stabilität und Zugfestigkeit verleiht. Die Seele kann auch ein elektrischer Leiter sein oder zumindest einen elektrischen Leiter enthalten oder umfassen. Diese Ausführungsform ist besonders vorteilhaft, da hier die Eigenschaft als lichtabgebendes Element mit der Möglichkeit kombiniert wird, elektrische Signale und/oder elektrische Energie zu transportieren. So könnte beispielsweise ein Lichtemitter, der Licht in den Kern 6 einkoppelt mit dem elektrischen Leiter versorgt werden. Damit bietet sich auch die Möglichkeit abschnittsweise mehrere Lichtemitter in den Lichtleiter zu integrieren, um eine homogene Leuchterscheinung des Lichtleiters auch über größere Strecken von mehreren hundert Metern zu realisieren oder mittels Lichtemittern unterschiedlicher Wellenlänge auch farbige Effekte und Effektabschnitte im Lichtleiter erzielen zu können. In einer weiteren Ausführungsform können Seele und/oder Kern und/oder Ummantelung eine allgemein unrunde oder polygonale Geometrie aufweisen, um eine gerichtete oder strukturierte Lichtabstrahlung zu erreichen oder die Befestigung an umgebenden Bauteilen zu ermöglichen.

Gemäß einer weiteren Ausführungsform umfasst die Seele 3 lichtstreuende Partikel. Ein Beispiel einer solchen Ausführungsform mit Partikeln 30 zeigt Fig. 3. Die Partikel 30 können bei einer Coextrusion der Kunststoffe von Kern 6 und Ummantelung 5 dem Kunststoff des Kerns 6 hinzugefügt werden. Gemäß noch einer Ausführungsform wird für die Seele 3 ein Kunststoff mit Partikeln 30 verwendet, die zusammen mit dem Kunststoff des Kerns 6 und der Ummantelung coextrudiert werden.

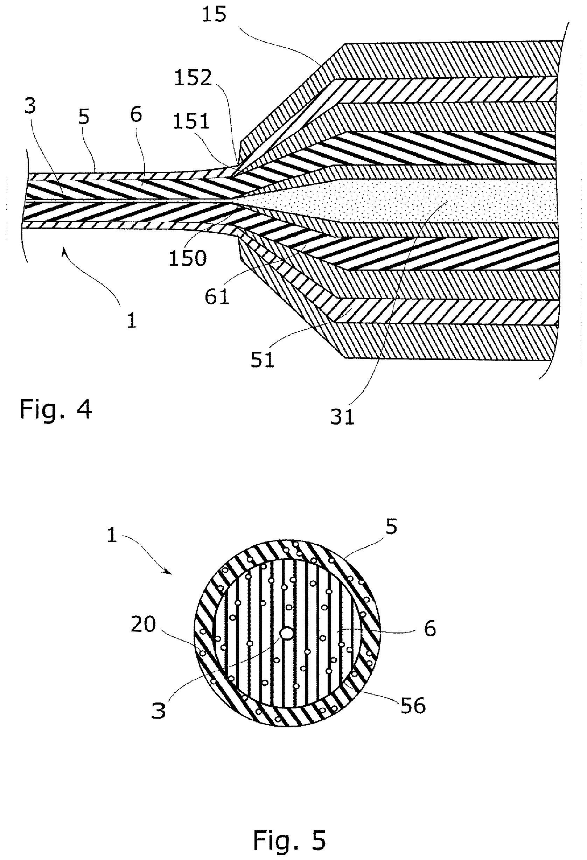

Insbesondere können aber auch drei Kunststoffe coextrudiert werden, wobei der innerste Kunststoff beispielsweise lichtstreuende Partikel enthält, um die lichtstreuende Seele 3 zu formen. Fig. 4 zeigt dazu eine entsprechende Extrusionsdüse 15 zur gleichzeitigen Extrusion von Seele 3, Kern 6 und Ummantelung 5. Die Extrusionsdüse 15 weist eine zentrale Düse 150 auf, durch welche der Kunststoff 31 zur Formung der Seele 3 extrudiert wird. Dieser Kunststoff kann wie bei dem Beispiel der Fig. 3 lichtstreuende Partikel enthalten. Um die zentrale Düse 150 sind zwei konzentrisch angeordnete Ringdüsen 151, 152 vorhanden, durch welche die Kunststoffe von Kern 6 und Ummantelung 5 extrudiert werden, so dass der Lichtleiter 1 mit lichtstreuender Seele 3, Kern 6 und Ummantelung 5 in einem Extrusionsschritt hergestellt werden können.

Als lichtstreuende Partikel 30 in der Seele kommen allgemein unter anderem folgende Materialien in Betracht: Oxide, wie Titandioxid, Zirkonoxid, Talkum (MgO), sowie Kreide, Tospearls, Glaskugeln (Hohlkugeln), Weißglasstäbchen.

Alternativ kann für die lichtstreuende Seele auch ein Polymer verwendet werden, welches keine lichtstreuenden Partikel enthält sondern durch seine molekularen Eigenschaften, bspw. Phasentrennungen oder Entmischungen, bedingt von sich aus eine lichtstreuende Wirkung entfaltet, die eine entsprechende Streulänge zur Folge hat, wie zum Beispiel ein PTFE. Auch ist eine Polymermischung als lichtstreuende Seele möglich, wobei die Polymermischung die entsprechende Streulänge des Lichts erzeugt, beispielsweise durch Kristallisation an den Grenzflächen der unterschiedlichen Polymere oder durch unterschiedliche Brechungsindizes der gemischten Polymere.

In einer bevorzugten Ausführungsform kann auch eine Kombination einer Polymermischung oder eines selbststreuenden Polymers und hinzugefügten Streupartikeln verwendet werden, um die Streuwirkung der Seele in einem Bereich von 5% bis 100% des auftreffenden Lichts gezielt einstellen zu können. So kann auch eine wellenlängenabhängige Streuung abschnittsweise im Lichtleiter eingestellt werden, was entweder zu einer Homogenisierung des Farbortes des abgestrahlten Lichts oder zur Erzeugung von Effektabschnitten genutzt werden kann.

Bei Verwendung von Streupartikeln und/oder Blasen und/oder anderen lokal definierten Streuzentren ist deren mittlere Querabmessung, insbesondere gemessen im Querschnitt senkrecht zur Längsachse, im Falle von runden Geometrien deren mittlerer Durchmesser (definiert als D50 Wert, d.h. 50% der vorhandenen Streupartikel sind kleiner als der angegebene Wert)) im Bereich von kleiner 50µm, bevorzugt kleiner 10µm, besonders bevorzugt kleiner als 1µm bei gleichzeitig deren so hoher Konzentration zu wählen, dass eine Streulänge im Bereich der doppelten Querabmessung der Seele 3 oder kleiner entsteht. Hierbei sind Konzentrationen von mehr als 10 Streupartikeln und/oder Blasen und/oder anderen lokal definierten Streuzentren pro Kubikmillimeter in Seele 3 vorteilhaft.

Die Verhältnisse der Durchmesser oder Flächen von Seele 3, Kern 6 und Mantel 5 können stark von den nur beispielhaften Darstellungen der Fig. 2 und Fig. 3 abweichen. Insbesondere kann die Ummantelung 5 eine im Verhältnis zum Kern 6 niedrigere Schichtdicke aufweisen. Durch den im Verhältnis zu Seele 3 und Ummantelung 5 dicken Kern 6 kann viel Licht in den Lichtleiter 1 eingekoppelt werden. Dies ist besonders bei einem Kunststoff-Lichtleiter von Vorteil, bei dem die Unterschiede der Brechungsindizes von Mantel und Kern, beziehungsweise die numerische Apertur nicht sehr groß sind. Allgemein ist dazu in einer Weiterbildung des Lichtleiters 1 vorgesehen, dass das Verhältnis der von der Kontur der Ummantelung eingeschlossenen Querschnittfläche des Lichtleiters 1 zur Querschnittfläche des von der Kontur des Kerns 6 eingeschlossenen Querschnittfläche im Bereich von 1,01 bis 2, vorzugsweise bei 1,1 bis 1,6 liegt. Weiterhin wird allgemein bevorzugt, dass die Schichtdicke der Ummantelung 5 mindestens 3 µm beträgt. Dies ist unter anderem sinnvoll, um eine zuverlässige Einbettung des Kerns 6 bei einer Coextrusion zu erreichen.

Im Falle eines wie in den Fig. 2 und Fig. 3 dargestellten runden Lichtleiters 1 sind die genannten Querschnittflächen die Kreisflächen mit den Durchmessern von Ummantelung 5 und Kern 6. Gemäß einem Beispiel weist der Lichtleiter 1 einen Durchmesser von 2 Millimetern auf. Die Ummantelung 6 hat eine Wandstärke von 0,2 Millimetern. Damit ergibt sich für die von der Kontur der Ummantelung 5 eingeschlossene Querschnittfläche A_{Mantel} = π · (2 mm / 2)² = 3,14 mm² und für die von der Kontur des Kerns 6 eingeschlossene Querschnittfläche A_{Kernl} = π · (1,6 mm / 2)² = 2,01 mm². Das Verhältnis der Querschnittflächen liegt damit bei 1,56.

Um eine hohe Leuchtdichte zu erreichen, die beispielsweise eine für das Auge sichtbare Lichtabgabe auch in einer taghellen Umgebung ergibt, ist es weiterhin günstig, eine dünne Seele 3 vorzusehen. Allgemein weist demgemäß in einer Weiterbildung die Seele 3 einen Durchmesser im Bereich von 10 Mikrometern bis 1000 Mikrometern auf. Vorzugsweise liegt der Durchmesser im Bereich von 100 µm bis 800µm. Die Seele 3 muss nicht unbedingt einen kreisrunden Querschnitt aufweisen. Die Größe der Seele 3 kann aber allgemein auch durch deren Querschnittfläche angegeben werden. Dabei weist die Seele 3 eine Querschnittfläche im Bereich von 80 µm² bis 0,8 mm² auf.

Die Konstruktion des Lichtleiters 1 mit einer lichtstreuenden Seele 3 ermöglicht eine einfache Anpassung der gewünschten lichttechnischen Eigenschaften. Günstige Eigenschaften mit hoher Leuchtdichte ergeben sich insbesondere, wenn der Durchmesser der Seele 3 im Bereich von 1/60 bis 1/2, vorzugsweise im Bereich von 1/20 bis 1/2 des Durchmessers des Kerns 6 liegt. Betrachtet man allgemeiner die Verhältnisse der Flächen, so liegt entsprechend dieser Ausführungsform das Verhältnis der Querschnittflächen von Seele 3, Q_{Seele} und Kern, Q_{Kern}, also das Verhältnis (Q_{Seele}/ Q_{Kern}) im Bereich von 2,5·10⁻³ bis 0,25.

Insbesondere kann die Lichtstreuung aber auch durch das Verhältnis der Querschnittflächen von Kern 6 und Seele 3 in Bezug auf die Länge des Lichtleiters eingestellt werden. Je größer der Kern 6 im Verhältnis zur Seele 3 ist, desto geringer ist die Lichtstreuung pro Längeneinheit.

Hierzu kann der Quotient aus dem Verhältnis der Querschnittflächen von Kern (Qₖₑᵣₙ) und Seele (Q_{Seele}) mit der Länge des Lichtleiters (L_{Lichtleiter}) betrachtet werden, also der Term (Qₖₑᵣₙ/Q_{Seele})/L_{Lichtleiter}. Günstige optische Eigenschaften ergeben sich bei Werten im Bereich von 20^{m-1} bis 500 m⁻¹.

Typischerweise unterscheidet sich ein seitenemittierender Lichtleiter von Lichtleitern zur Datenübertragung durch eine geringere vorgesehene Länge, da mit steigender Länge bei gegebener Helligkeit des angekoppelten Lichtemitters die Leuchtdichte sinkt. Ohne Beschränkung auf bestimmte Ausführungsformen ist dazu in einer Weiterbildung der Erfindung vorgesehen, dass der Lichtleiter 1 eine Länge im Bereich von 0,5 Meter bis 100 Meter, vorzugsweise bis 50 Meter aufweist. Große Längen sind insbesondere in Verbindung mit Lasern als Lichtemitter geeignet. Für dekorative Beleuchtungen und andere lichttechnische Anwendungen sind kürzere Längen bis 105 Meter, vorzugsweise 2,5 bis 5 Meter besonders geeignet. Im medizinischen Bereich, u.a. als Komponente, zur einmaligen oder mehrmaligen Verwendung, in Einrichtungen für diagnostische und therapeutische Behandlungen sind Längen kleiner 0,5 Meter, bevorzugt kleiner 0,1 Meter, insbesondere bevorzugt 0,01 bis 0,05 Meter geeignet bei dabei bevorzugtem Durchmesser des Lichtleiters 1 von circa 1mm und dünner.

Es hat sich herausgestellt, dass das Problem einer Ablösung der Ummantelung 5 vom Kern 6 besonders effektiv dadurch umgangen werden kann, indem die Kunststoffe von Ummantelung 5 und Kern 6 einen Polymerblend, beziehungsweise eine Mischung zumindest zweier Polymere umfassen. Es hat sich auch gezeigt, dass eine Mischung von Polymeren für hinreichend transparente Elementen für den Lichtleiter 1 möglich ist und eine für die Streuung relevante Entmischung der Phasen ausbleibt, oder zumindest nicht kritisch ist. Letzter Punkt ist insbesondere in Bezug auf seitenemittierende Lichtleiter relevant. Selbst wenn eine Entmischung auftritt, ist eine geringfügige, damit verbundene Lichtstreuung hier nicht sehr schädlich, solange die Lichtstreuung an der Seele dominiert. Anders als etwa bei Lichtleitern für die Signalübermittlung führt eine Lichtstreuung hier nicht zu einer erheblichen Einschränkung der Funktionalität. Dies hängt auch mit der typischerweise für die hier vorgesehenen Anwendungen relativ geringen Länge des Lichtleiters 1 zusammen, da Licht nicht über lange Strecken verlustarm geleitet werden muss.

Mit einem Polymerblend lassen sich die Eigenschaften einer hinreichenden Transparenz, als auch einer hohen Flexibilität vereinen. Als eine Komponente, beziehungsweise eines der Polymere des Polymerblends kann vorzugsweise ein aliphatisches Polyurethan eingesetzt werden. Diese ist besonders elastisch und kann zu einem hoch transparenten Polymerblend mit anderen Kunststoffen kombiniert werden. Insbesondere kann ein solches aliphatisches Polyurethan auch ein thermoplastisches Elastomer sein. Alternativ oder zusätzlich kann als Komponente auch ein anderes thermoplastische Elastomer Bestandteil des Polymerblends sein. Gemäß einer weiteren Ausführungsform ist dementsprechend vorgesehen, dass zumindest eines der Polymere des Polymerblends ein thermoplastisches Elastomer bildet.

Bei einer weiteren Ausführungsform ist eines der Polymere des Polymerblends ein Polycarbonat. Polycarbonate sind für die Transparenz der Ummantelung von Vorteil. Gleiches gilt für PMMA. Gemäß noch einer weiteren alternativen oder zusätzlichen Ausführungsform ist daher vorgesehen, dass eines der Polymere des Polymerblends ein Polymethylmethacrylat ist.

Eine besonders geeignete Kombination ist ein Polymerblend, welcher allgemein Polymethylmethacrylat und thermoplastisches Polyurethan enthält. Diese beiden Komponenten können insbesondere alleine den Polymerblend bilden oder bei Vorhandensein weiterer Komponenten die beiden Komponenten mit den zwei größten Anteilen in der Mischung des Blends sein.

PMMA und thermoplastisches Polyurethan lassen sich auch gut in verschiedenen Mischungsverhältnissen zusammenführen, um Mischungen hinreichend unterschiedlicher Brechungsindizes für Kern und Ummantelung herzustellen. Bevorzugt ist ein Verhältnis von PMMA zu TPU im Bereich von 90 Gewichtsprozent zu 10 Gewichtsprozent bis 10 Gewichtsprozent zu 90 Gewichtsprozent.
25 Teilen PMMA zu 30 Teilen TPU, besonders bevorzugt ist ein
Masseverhältnis von PMMA zu TPU von 60 Teilen PMMA zu 40 Teilen TPU

Weitere Polymere, die für geeignete, hinreichend transparente Polymerblends, insbesondere als weitere Komponente zusätzlich zu zwei Komponenten mit den beiden höchsten Anteilen sind Polymere vom Typ Polyether, Polystyrol, Polyacrylnitril, Polyester, Polyvinylchlorid. Auch können aus den hier genannten Polymeren gebildete Copolymere als Komponenten eingesetzt werden.

Gemäß noch einer weiteren, besonders bevorzugten Weiterbildung der Ausführungsform mit Polymerblends als Kunststoffe ist vorgesehen, dass die Kunststoffe sowohl von Kern 6, als auch von der Ummantelung 5 Polymerblends mit zumindest zwei übereinstimmenden Polymerkomponenten sind, wobei die Anteile der Polymerkomponenten unterschiedlich gewichtet sind, so dass der Brechungsindex der Ummantelung 5 niedriger als der Brechungsindex des Kerns 6 ist.

Es ist gemäß noch einer Weiterbildung vorgesehen, dass zumindest einer der Kunststoffe von Kern 6 und Ummantelung 5 Polymerpartikel enthält. Diese Partikel können die mechanischen Eigenschaften weiter verbessern. So sind Polymerpartikel als Zusatz zur Erhöhung der Schlagzähigkeit bekannt. Fig. 5 zeigt in Querschnittansicht eine Variante der Ausführungsform der Fig. 2. Bei dieser Variante sind sowohl im Kunststoff der Ummantelung 5, als auch im Kunststoff des Kerns 6 Polymerpartikel 20 eingebettet. Allgemein, ohne Beschränkung auf das spezielle Beispiel ist vorgesehen, dass zumindest einer der Kunststoffe von Ummantelung 5 und Kern 6 eingebettete Polymerpartikel enthält. Eine sehr transparenter und gleichzeitig schlagzäher und abriebfester und damit gegen Verkratzen widerstandsfähiger Kunststoff kann gemäß einer vorteilhaften Weiterbildung erhalten werden, wenn zumindest einer der Kunststoffe von Ummantelung 5 und Kern 6 Polymerpartikel 20 mit vernetztem PMMA enthält. Diese Ausführungsform eignet sich dann noch besonders in Kombination mit einem Polymerblend, der PMMA enthält. Gemäß noch einer Weiterbildung der Erfindung ist also ein Polymerblend vorgesehen, der als eine Komponente PMMA enthält und zusätzlich Polymerpartikel mit vernetztem PMMA. Besonders bevorzugte Kunststoffe, die sowohl für den Kern 6, als auch den Ummantelung 5, insbesondere für beide Elemente verwendet werden, sind Polymerblends mit PMMA und aliphatischem, beziehungsweise thermoplastischem Polyurethan, sowie die genannten Partikel 20 mit vernetztem PMMA.

In einer Ausführungsform sind anders als in Fig. 5 dargestellt, nur in der Ummantelung Polymerpartikel 20 eingebettet. So kann der Kern aus einem reinen PMMA oder TPU und die Ummantelung aus einem Polymerblend geformt werden. Mit dieser Ausführungsform kann eine besonders hohe Transparenz des Kerns 6 erzielt werden.

Es ist mit dem hier beschriebenen Aufbau eines Lichtleiters 1 auch möglich, alternativ oder zusätzlich zu Schlagzähmodifikatoren weitere Zuschlagstoffe einzusetzen, die ansonsten für die optischen Eigenschaften eher nachteilig sind. Insbesondere ist daran gedacht, in der Ummantelung 5 zumindest einen Zuschlagstoff einzusetzen, der ein Flammhemmer oder ein UV-Stabilisator sein kann. Die optischen Eigenschaften des Lichtleiters 1 werden durch diese Zuschlagstoffe in der Ummantelung 5 kaum beeinflusst, da die Transmission des Kerns 6 nicht gestört wird und das Licht nach einer Streuung an der Seele 3 nur eine kurze Strecke durch den Ummantelung 5 zurücklegt.

Im Allgemeinen zeichnen sich die hier beschriebenen Lichtleiter 1 durch eine hohe Resistenz gegenüber einer Veränderung der optischen Eigenschaften nach einem Biegen des Lichtleiters aus. Dies, da durch die verwendeten Kunststoffe eine Verbindung zwischen Kern und Ummantelung geschaffen wird, die bei oder nach einer Biegung des Lichtleiters im Allgemeinen nicht löst. Insbesondere gilt gemäß einer Ausführungsform, dass der durch die Biegung des Lichtleiters 1 verursachte zusätzliche Lichtverlust bei einem Biegeradius des Lichtleiters 1 von 21mm weniger als das 0,1-fache der gesamten im Lichtleiter geführten Lichtintensität pro Wicklung des Lichtleiters 1 beträgt. Weiterhin können die durch eine Biegung des Lichtleiters 1 verursachten zusätzlichen Lichtverluste bei einem Biegeradius des Lichtleiters 1 von 12mm weniger als das 0,3-fache der gesamten im Lichtleiter geführten Lichtintensität pro Wicklung des Lichtleiters 1 betragen. Diese Eigenschaften gelten insbesondere für Lichtleiter 1 mit einem Außendurchmesser, beziehungsweise einem Durchmesser der Ummantelung von 10 mm oder weniger, insbesondere also für Lichtleiter mit einem Durchmesser im Bereich von 1 bis 10 Millimeter. Dabei wird die positive Eigenschaft, dass wenig zusätzliches Licht beim Biegen ausgekoppelt wird umso größer, je größer der Außendurchmesser des Lichtleiters ist. Die zusätzlichen, also zusätzlich zu den ohnehin durch Streuung an der Seele 3 durch Abstrahlung verursachten Lichtverluste sind sonst als Abschnitte, gegebenenfalls auch nach einer Biegebelastung, also irreversibel, zu erkennen bzw. weiter vorhanden, die gegenüber benachbarten Bereichen heller erscheinen. Demnach erscheint die Lichtabstrahlung dann ungleichmäßig entlang des Lichtleiters, mit einer oder mehreren heller leuchtenden Bereichen.

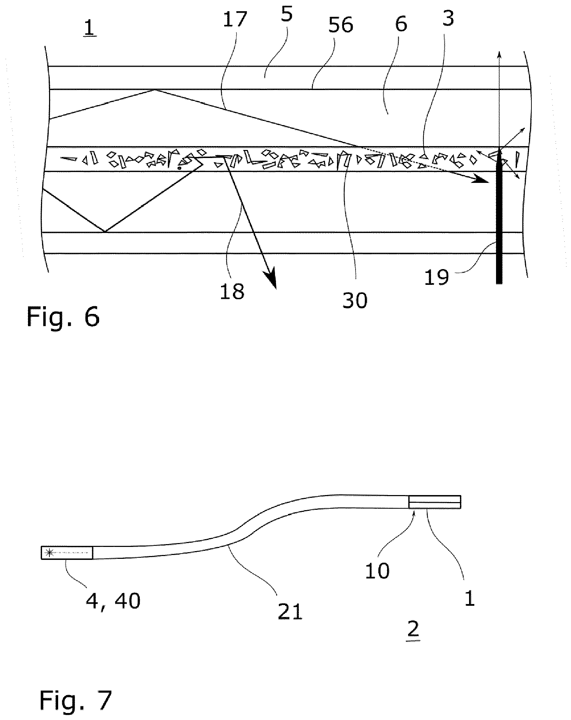

Fig. 6 zeigt schematisch einen Lichtleiter 1 in seitlicher Ansicht mit beispielhaften Strahlengängen zweier Lichtstrahlen 17, 18. Die Seele 3 dieses Beispiels umfasst als lichtstreuende Elemente sowohl Partikel 30, als auch Blasen 32. Solche Blasen 32 können bei der Herstellung des Lichtleiters 1 mittels Extrusion, insbesondere mittels Coextrusion durch eine physikalische oder chemische Schäumung gezielt erzeugt werden.

Beide Lichtstrahlen 17, 18 werden an der Grenzfläche 56 zwischen Ummantelung 5 und Kern 6 totalreflektiert und dadurch im Kern 6 geführt. Der Lichtstrahl 17 geht nach der Reflexion an der Grenzfläche 56 seitlich an der Seele 3 vorbei und wird dadurch nicht gestreut. Im Unterschied dazu trifft der Lichtstrahl 18 auf die Seele 3 und erfährt eine Streuung an den lichtstreuenden Partikeln im Kunststoff der Seele 3. Die durch die Streuung verursachte Richtungsänderung des Lichtstrahls 18 ist derart, dass der Winkel, unter dem der Lichtstrahl auf die Grenzfläche 56 trifft, den Grenzwinkel der Totalreflexion überschreitet, so dass der Lichtstrahl die Grenzfläche 56 und die Ummantelung 5 passiert und nach außen austritt. Wie dargestellt wird der Lichtstrahl 18 dabei sogar mehrfach, im Beispiel dreifach gestreut. Die mittlere Anzahl der Streuungen ergibt sich vor allem aus der Dichte der streuenden Elemente, Partikel 30 und/oder Blasen 32, in der Seele 3. Eine Mehrfachstreuung erweist sich als günstig für die Winkelverteilung des vom Lichtleiter 1 abgegebenen Lichts. Bei einer Einfachstreuung ergibt sich eine Vorzugsrichtung entlang des Lichtleiters in Richtung der Lichtleitung, bei dem dargestellten Beispiel also in Richtung von links nach rechts. Der Lichtleiter 1 erscheint damit unterschiedlich hell, je nachdem in welcher Richtung man diesen betrachtet. Dieser Effekt kann durch Mehrfachstreuung abgeschwächt oder sogar aufgehoben werden, so dass die Lichtabgabe im Wesentlichen isotrop ist. Gemäß einer bevorzugten Ausführungsform ist daher allgemein vorgesehen, dass die lichtstreuenden Partikel 30 eine Dichte in der Seele 3 aufweisen, die so hoch ist, dass die auf die Seele 3 treffenden Lichtstrahlen von im Kern 6 geführten Licht im Mittel mehr als einmal gestreut werden. Dieser Mittelwert kann auch kleiner als der Wert 2 sein.

Der Lichtstrahl 19 stammt nicht von einem mit dem Kern 6 gekoppelten Lichtemitter 4, sondern tritt seitlich auf den Lichtleiter 1 auf, durchquert die Ummantelung 5 und den Kern 6 und wird in der Seele 3 durch Streuung abgeschwächt. Die Lichtintensität ist durch die Strichdicke symbolisiert, die Streuung durch die abzweigenden dünnen Pfeile. Die Seele ist entweder vollkommen undurchsichtig oder zumindest, wie im dargestellten Beispiel so stark streuend, dass die Streulänge höchstens doppelt so lang ist, wie die größte Querabmessung, insbesondere der Durchmesser der Seele 3. Im dargestellten Beispiel durchquert noch ein geringer Anteil der ursprünglichen Lichtintensität die Seele 3 vollständig. Diese ist aber im Allgemeinen so gering, dass die Seele 3 seitlich betrachtet undurchsichtig erscheint.

Allgemein kann die Seele 3 von entlang der radialen Richtung des Querschnitts, also von innen nach außen eine variierende Beschaffenheit aufweisen. Dies kann insbesondere auch einen mehrschichtigen Aufbau der Seele 3 umfassen. Bei dem dargestellten Beispiel sind die Konzentrationen von Partikeln 30 und Blasen 32 in radialer Richtung unterschiedlich. Im Speziellen sind die Partikel 30 eher in der Mitte der Seele 3 konzentriert, wohingegen die Blasen eher in der Peripherie der Seele vorhanden sind. Auch wenn hier keine scharfe Grenzfläche vorhanden ist, stellt dies einen mehrschichtigen Aufbau dar, bei welchem ein innerer Teil mit hoher Partikelkonzentration von einer Schale mit einer hohen Blasenkonzentration umgeben ist. Auch bei der bereits erläuterten Ausführungsform mit einem Draht oder Seil als Bestandteil der Seele 3 kann diese mit einer streuenden, insbesondere opaken Kunststoffschicht umgeben sein, so dass eine mehrschichtige Seele 3 vorliegt.

Der Lichtleiter 1, wie er hier beschrieben ist, eignet sich besonders als Kontur- oder Akzentbeleuchtung, oder allgemeiner als dekorative Beleuchtung. Als derartiges Gestaltungselement kann der Lichtleiter eine solche Beleuchtung in Innenräumen von Gebäuden, sowie deren Ausstattung, z.B. im oder am Mobiliar, oder an oder bei Geräten und Maschinen, sowie im Außenbereich von Gebäuden, etwa an Fassaden, sowie zur Innen- oder Außenbeleuchtungen von Fahrzeugen eingesetzt werden. Fahrzeuge könne rad- und schienengebundenen Fahrzeuge, Schiffe und Flugzeuge sein.

Insbesondere bei Fahrzeugen, wie Automobilen, Flugzeugen, Schiffen und/oder Zügen kann der Lichtleiter als Teil von Innenverkleidungen von Fahrzeugen verwendet werden. Im Bereich der Innenausstattung kann der Lichtleiter als Teil von Möbeln, insbesondere von Fahrzeugsitzen, Wohnlandschaften und/oder Küchen eingesetzt werden. Weitere Anwendungen sind die
- Verwendung als Bestandteil eines Scheinwerfers (40), insbesondere eines Fahrzeugscheinwerfers, die
- Beleuchtung von Landebahnen für Luftfahrzeuge, die
- Verwendung zusammen mit anderen Lichtleitern und/oder anderen seitenemittierenden Stufenindexfasern zur Bildung eines Flächengebildes, welches seinerseits einen Beleuchtungskörper bilden kann,
- die Hintergrundbeleuchtung von Displays, die
- Verwendung als Ambient- oder Abgrenzungsbeleuchtung in Fahrzeugen, Schiffen, Flugzeugen, Gebäuden, Straßen, Wegweiser, Straßenschilder, Textilien, die
- Verwendung als Sicherheitsbeleuchtung mit selbstleuchtenden phosphoreszierenden Zusatzstoffen.

Eine weitere Anwendung ist die Verwendung in oder an medizintechnischen Vorrichtungen, zum Beispiel als Akzent- oder Kontur- oder Sicherheitsbeleuchtung daran. Es ist weiter auch vorgesehen, den Lichtleiter 1 oder die Lichtquelle 2 als Vorrichtung oder zumindest als Komponente einer Vorrichtung für ein medizinisches Therapieverfahren, insbesondere für eine photodynamische Therapie (PDT) zur Tumortherapie, für eine endovenöse Lasertherapie (EVLT) zur Behandlung von Krampfadern, für eine Laser- induzierte interstitielle Thermotherapie (LITT) oder für Anwendungen im Bereich der Augenheilkunde, der Dentalmedizin, sowie der Dermatologie zu verwenden. Insbesondere bei Letzteren auch zur Unterstützung von Wundheilungen. Im Hinblick auf die Verwendung im medizintechnischen Umfeld ist es weiterhin von Vorteil, wenn der verwendete Kunststoff, die verwendeten Kunstoffe, also auch die Polymerblends bevorzugt biokompatiblen Kunststoff-Materialien umfassen, welche zum Beispiel gemäß den Normen EN ISO 10993-1:2018 beziehungsweise EN ISO 10993-5:2009 beziehungsweise USP Class VI gelistet sind. Zudem sollte das zum Einsatz kommende Material derart ausgewählt sein, dass dieses sterilisierbar, insbesondere Ethylenoxid-sterilisierbar (EO), ist, da diese Sterilisationsmethode insbesondere bei Einweg-Anwendungen (Disposable-Anwendungen oder Single-Use-Anwendungen) im medizintechnischen Bereich von Interesse ist, wie dies die ISO 11135:2014 beschreibt. Hierbei ist insbesondere auf eine Chlor-Freiheit des Materials zu achten, da ansonsten während des EO-Prozesses chlorhaltige Verbindungen entstehen können, die zum einen toxisch sein können und zum anderen nur unvollständig nach dem Sterilisationsprozeß ausgetrieben werden können.

Eine Verwendung der erfindungsgemäßen Lichtleiter ist auf Grund ihrer Biegeunempfindlichkeit besonders vorteilhaft im Einsatz bei Photo-Bioreaktoren oder jeder anderen Art von photobiologischen Prozessen. Dabei können die Lichtleiter sowohl von außen an (transparenten) Reaktoren angebracht werden als auch unabhängig von der Transparenz der Reaktorwandung im Inneren von solchen Reaktoren, da die Lichtleiter flüssigkeitsundurchlässig sind und beständig sind gegen Chemikalien.

Eine Ausführungsform einer Lichtquelle 2, die unter anderem und besonders auch für medizinische Anwendungen geeignet ist, zeigt Fig. 7. Bei dieser Ausführungsform wird das Licht des Lichtemitters 4 in einen weiteren Lichtleiter 21 eingekoppelt, der optisch mit einem Ende 10 des seitenemittieren Lichtleiters 1 verbunden ist. Diese Ausführungsform ist dann besonders sinnvoll, wenn auch der weitere Lichtleiter 21 flexibel ausgebildet ist. Vorzugsweise wird hier für den seitenemittierenden Lichtleiter ein kurzer Abschnitt verwendet. So ist in Weiterbildung dieser Ausführungsform daran gedacht, Lichtleiter mit einer Länge im Bereich von 5 mm bis 50 mm einzusetzen. Der Lichtleiter 1 dient hier als Diffusor für das im weiteren Lichtleiter 21 zugeführte Licht. Für medizinische Anwendungen kann der Diffusor an eine vorgesehene Position an oder im Körper eines zu behandelnden Patienten geführt und das Licht dort über den Lichtleiter 1 abgegeben werden. Der weitere Lichtleiter 21 kann zur optischen Kopplung an den Lichtleiter 1 angeschmolzen oder mit dem Lichtleiter 1 verklebt sein. Für hohe Lichtintensitäten bietet es sich hier generell an, halbleiterbasierte Lichtemitter einzusetzen. Insbesondere ist an einen Laser 40 als Lichtemitter 4 gedacht.

Ohne Beschränkung auf das spezielle dargestellte Beispiel ist zusammenfassend eine Lichtquelle 2 vorgesehen, bei welcher der seitenemittierende Lichtleiter 1 mit einem weiteren flexiblen Lichtleiter 21 verbunden ist, und wobei ein Lichtemitter 4, vorzugsweise ein Laser 40 an den weiteren flexiblen Lichtleiter 21 gekoppelt ist, so dass das Licht des Lichtemitters 4 über den weiteren Lichtleiter 21 in den seitenemittierenden Lichtleiter 1 eingekoppelt und entlang des seitenemittierenden Lichtleiters 1 abgegeben wird. Diese Lichtquelle 2 kann insbesondere für die oben genannten medizinischen Anwendungen eingesetzt werden.

Die Grundfunktion des seitenemittierenden Lichtleiters 1 wird durch die Lichtstreuung in oder an der Seele 3 bewirkt. Neben der Streueigenschaft kann der Lichtleiter 1 aber ganz allgemein auch filternde Eigenschaften haben oder das Spektrum des abgestrahlten Lichts gegenüber dem Spektrum des eingekoppelten Lichts verändern. Auf diese Weise können eine Vielzahl von Lichteffekten erzielt werden. Gemäß einer Ausführungsform enthält die Seele 3 Pigmente oder andere farbige Streupartikel. Diese Streupartikel absorbieren Teile des Lichts abhängig von der Wellenlänge, so dass auch das reflektierte, beziehungsweise gestreute Licht sich spektral vom im Kern geführten Licht unterscheidet und eine Färbung verleiht bekommt. Gemäß einer weiteren alternativen oder zusätzlichen Ausführungsform ist zumindest einer der Kunststoffe von Kern 6 und Ummantelung 5 gefärbt. Der Farbstoff erhöht im Allgemeinen nicht die Streuung, so dass der Kunststoff transparent bleibt. Der Farbstoff gemäß dieser Ausführungsform ist also demgemäß kein Pigment. Durch die partielle spektrale Absorption des Farbstoffes wird die spektrale Verteilung des durch den Kunststoff durchgehenden Lichts geändert. Gegebenenfalls ist der Farbstoff durch das verwendete Polymer oder eine Polymerkomponente selbst gegeben, im Unterschied zur Alternative von in der Polymermatrix gelösten Farbstoffmolekülen.

Noch eine weitere Möglichkeit zur spektralen Beeinflussung des Lichts ist die Umwandlung in andere Wellenlängen, also die Konversion von Licht einer Wellenlänge in Licht zumindest einer anderen Wellenlänge mit einem geeigneten Konversionsmaterial. Dies ist von Vorteil, um für eine spektrale Änderung des abgegebenen Lichts wenig Intensität zu verlieren. Eine solche Konversion wird insbesondere erzielt, indem der Lichtleiter 1 ein photolumineszentes Material enthält. Die Photolumineszenz kann sowohl eine Fluoreszenz, als auch eine Phosphoreszenz sein. Das photolumineszente Material kann in einer oder mehreren der Komponenten des Lichtleiters 1 enthalten sein, der mit dem Licht in Berührung komme, insbesondere in Seele 3 und Ummantelung 5. Beispielsweise kann die Seele 3 photolumineszente Partikel 30 enthalten. So kann beispielsweise blaues Licht eingespeist und an der Seele 3 gestreut und teilweise je nach Eigenschaften der Partikel bspw. in gelbes Licht konvertiert werden, um durch die Mischung dieser Komponenten weißes Licht abzustrahlen. Beispielsweise kann aber auch ein photolumineszentes Material in der Ummantelung enthalten sein, um beim Durchgang des an der Seele gestreuten Lichts zumindest einen Teil der Intensität zu konvertieren. Hier werden auch die erzielbaren unterschiedlichen optischen Effekte deutlich. Bei einer gefärbten Ummantelung 6 wird der Farbeindruck der für den Betrachter hell leuchtenden Seele 3 geändert. Bei einem photolumineszenten Farbstoff in der Ummantelung 6 entsteht ein Lichtschein um die hell leuchtende Seele 3, wobei dieser Lichtschein eine andere Farbe als das von der Seele direkt abgestrahlte Licht aufweist. Bei Verwendung von phosphoreszierenden Zusatzstoffen kann ein Nachleuchteffekt des Lichtleiters erzeugt werden, auch wenn die Lichtquelle des Lichtleiters abgeschaltet wird. So kann eine Sicherheitsbeleuchtung erzielt werden, zum Beispiel für den Einsatz in Krankenhäusern, Fahrzeugen, Schiffen oder im Flugzeugbereich. Außerdem werden die phosphoreszierenden Partikel im Lichtleiter auch von äußerem Licht aufgeladen, so dass solche Lichtleiter auch als passive Sicherheitsbeleuchtung oder als passive Akzentbeleuchtung eingesetzt werden kann.

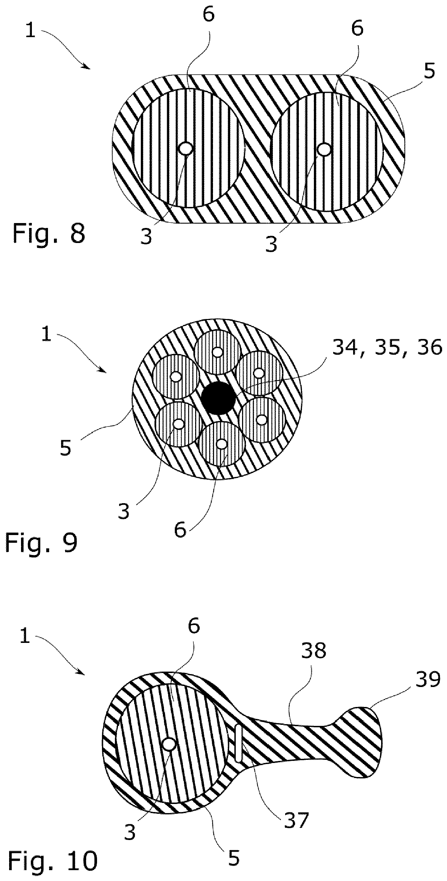

Fig. 8 zeigt ein Beispiel einer Ausführungsform des Lichtleiters 1, bei welcher mehrere Kerne 6 von einer gemeinsamen Ummantelung 5 umgeben sind. Entlang der Kerne 6 verläuft zur Lichtabgabe jeweils zumindest eine Seele 3. Bei dem Ausführungsbeispiel der Fig. 3 sind zwei Kerne 6 vorgesehen, aber es ist auch möglich noch mehr Kerne 6 in einer Ummantelung 5 zusammenzufassen.

Auch eine solche Ausführungsform kann zur Erzielung besonderer Lichteffekte ausgebildet werden. So kann in den Kernen 6 unterschiedlich farbiges Licht eingekoppelt werden.

Weiterhin können auch Leiter oder Elemente mit anderer Funktion in der Ummantelung integriert werden.

Fig. 9 zeigt ein weiteres Beispiel der Ausführungsform mit mehreren Kernen 6, die von einer gemeinsamen Ummantelung 5 umgeben sind. Hier sind, wie dargestellt sechs kreisförmig in der Ummantelung 5 verteilte Kerne 6 vorhanden. Diese können auch, wie es generell bei Vorhandensein mehrerer Kerne möglich ist, beispielsweise auch verseilt, beziehungsweise verdrillt verlaufen.

Gemäß noch einer Ausführungsform, die ebenfalls im dargestellten Beispiel realisiert ist, ist vorgesehen, dass zusätzlich zum zumindest einen Kern 6 in der Ummantelung 5 ein in Längsrichtung des Lichtleiters 1 verlaufendes Funktionselement 34 angeordnet ist. Ein solches Funktionselement 34 kann insbesondere ein elektrischer Leiter 35 oder ein Bewehrungselement 36 sein. Als Bewehrungselement 36 kommt ein Metall- oder Kunststoff-Draht oder ein Seil in Betracht. Auch kann ein elektrischer Leiter 35 gleichzeitig auch die Funktion eines stabilitätserhöhenden Bewehrungselements 36 haben.

Das Funktionselement kann auch eine optische Funktion haben. Bei dem in Fig. 10 gezeigten Beispiel ist das Funktionselement 34 ein langgestrecktes Reflexionselement 37 zur Reflexion des an der Seele 3 abgestrahlten Lichts. Bevorzugt ist das Reflexionselement 37 wie dargestellt flach und damit streifenförmig.

Gemäß noch einer Ausführungsform, die ebenfalls in dem dargestellten Beispiel der Fig. 10 realisiert ist, weist die Ummantelung ein langgestrecktes Befestigungselement 38 auf, um den Lichtleiter 1 formschlüssig an einem korrespondierenden Halteelement, etwa einer Nut oder einer Schiene an einem mit dem Lichtleiter 1 auszustattenden Gegenstand zu befestigen. Bei dem dargestellten Beispiel ist das Befestigungselement 38 als Rippe mit einem verdickten Abschluss 39 ausgestaltet. Die Rippe kann dann in eine korrespondierende Nut eingesetzt werden, wobei der verdickte Abschluss 39 eine Verrastung bewirkt.

Alle vorgenannten Varianten können auch nur abschnittsweise im Lichtleiter integriert bzw. angewendet werden, während andere Abschnitte diese Funktionalitäten nicht aufweisen. Damit lassen sich eine Vielzahl von Effekten erzielen. Auch sind abschnittsweise keine seitlich lichtabstrahlenden Eigenschaften möglich, so dass verlustarm das Licht an weiter entfernte Stellen transportiert werden kann.

Generell können elektromagnetische Strahlungsquellen bzw. -emitter für den Lichtleiter in einem Wellenlängenbereich von 150nm bis 15µm zum Einsatz kommen, ja nach verwendeten Materialien für den Lichtleiter und gewünschter Anwendung. Denkbar sind dabei jede Art von Laserquellen, LEDs, Lichtbogenlampen, Glühfadenlampen oder jede andere Art von geeigneten Strahlungsquellen.

### Bezugszeichenliste

| | |
|---|---|
| 1 | Lichtleiter |
| 2 | Lichtquelle |
| 3 | Seele |
| 4 | Lichtemitter |
| 5 | Ummantelung |
| 6 | Kern |
| 10, 11 | Enden von 1 |
| 12 | Biegung |
| 15 | Extrusionsdüse |
| 17, 18, 19 | Lichtstrahlen |
| 20 | Polymerpartikel |
| 21 | weiterer Lichtleiter |
| 30 | Partikel |
| 31 | Kunststoff der Seele 3 |
| 32 | Blase |
| 34 | Funktionselement |
| 35 | elektrischer Leiter |
| 36 | Bewehrungselement |
| 37 | Reflexionselement |
| 38 | Befestigungselement |
| 39 | verdickter Abschluss |
| 40 | Laser |
| 51 | Kunststoff der Ummantelung 5 |
| 61 | Kunststoff des Kerns 6 |
| 56 | Grenzfläche zwischen 5, 6 |
| 150 | Zentrale Düse |
| 151, 152 | Ringdüse |
| | |

## Patentansprüche

1. Seitenemittierender Lichtleiter (1), umfassend einen Kern (6), in welchem zumindest eine Seele (3) verläuft, sowie eine den Kern (6) umgebende, transparente Ummantelung (5), wobei der Kern (6) und die Ummantelung (5) aus transparentem Kunststoff geformt sind, wobei der Kern (6) einen höheren Brechungsindex aufweist, als die Ummantelung (5), und wobei die Seele (3) lichtablenkend, insbesondere lichtreflektierend oder lichtstreuend, ausgebildet ist, um im Lichtleiter geführtes Licht zu streuen und durch die Ummantelung (5) hindurch nach außen abzugeben, **dadurch gekennzeichnet, dass** die Streulänge der Seele (3) höchstens doppelt so groß ist wie die maximale Querabmessung der Seele (3), wobei die Streulänge als die Länge definiert ist, bei welcher durch Streuung die ursprüngliche Intensität des Lichts in Einstrahlrichtung auf einen Faktor 1/e abgesunken ist, und die Seele (3) lichtstreuende Elemente umfasst und mittig im Kern (6) verläuft, sodass die lichtstreuende Elemente der Seele (3) zumindest teil- oder abschnittsweise konzentriert in einem diskreten Bereich innerhalb des Kerns (6) angeordnet sind.

2. Seitenemittierender Lichtleiter (1) gemäß dem vorstehenden Anspruch, bei welchem die Seele (3) eine Querschnittfläche gemessen in Richtung senkrecht zur Längsrichtung des Lichtleiters (1) aufweist, die um mindestens einen Faktor 4 kleiner ist als die von der Außenkontur der transparenten Ummantelung (5) eingeschlossenen Querschnittfläche.

3. Seitenemittierender Lichtleiter (1) gemäß einem der vorstehenden Ansprüche, **dadurch gekennzeichnet, dass** die Seele (3) zumindest eine der folgenden Merkmale aufweist:
- die Seele (3) umfasst ein Seil oder einen Draht,
- die Seele (3) weist einen Durchmesser im Bereich von 10 µm bis 1000 µm oder eine Querschnittfläche im Bereich von 80 µm² bis 0,8 mm² auf.
- die Seele (3) weist in radialer Richtung des Querschnitts eine variierende Beschaffenheit auf,
- die Seele hat einen mehrschichtigen Aufbau,
- die Seele enthält zumindest einen elektrischen Leiter oder wird durch zumindest einen elektrischen Leiter gebildet.

4. Seitenemittierender Lichtleiter (1) gemäß einem der vorstehenden Ansprüche, **dadurch gekennzeichnet, dass** die Kunststoffe von Ummantelung (5) und Kern (6) einen Polymerblend umfassen.

5. Seitenemittierender Lichtleiter (1) gemäß dem vorstehenden Anspruch, mit zumindest einem der folgenden Merkmale:
- zumindest eines der Polymere des Polymerblends ist ein aliphatisches Polyurethan,
- zumindest eines der Polymere des Polymerblends bildet ein thermoplastisches Elastomer,
- eines der Polymere des Polymerblends ist ein Polymethylmethacrylat,
- eines der Polymere des Polymerblends ist ein Polycarbonat,
- zumindest einer der Kunststoffe von Ummantelung (5) und Kern (6) enthält eingebettete Polymerpartikel
- die Ummantelung (5) enthält zumindest einen Zuschlagstoff, insbesondere ausgewählt aus einer Gruppe umfassend einen UV-Stabilisator, einen Flammhemmer, ein Schlagzähigkeitsmodifikator oder einer Kombination daraus,
- der Polymerblend enthält Polymethylmethacrylat und thermoplastisches Polyurethan,
- der Polymerblend enthält Partikel (20) mit vernetztem PMMA,
- die Kunststoffe sowohl von Kern (6), als auch von der Ummantelung (5) sind Polymerblends mit zumindest zwei übereinstimmenden Polymerkomponenten, wobei die Anteile der Polymerkomponenten unterschiedlich gewichtet sind, so dass der Brechungsindex der Ummantelung (5) niedriger als der Brechungsindex des Kerns (6) ist.

6. Seitenemittierender Lichtleiter (1) gemäß einem der vorstehenden Ansprüche, aufweisend wenigstens eines der folgenden Merkmale:
- der Lichtleiter umfasst mehrere Kerne (6), die von einer gemeinsamen Ummantelung (5) umgeben sind,
- der Lichtleiter (1) weist eine Länge im Bereich von 0,5 Metern bis 100 Metern auf,
- das Verhältnis der Querschnittflächen von Seele (3), Qseeie und Kern, Q_{Kern}, (Q_{Seele}/ Q_{Kern}) liegt im Bereich von 2,5·10⁻³ bis 0,25, oder
- das Verhältnis der Durchmesser von Seele (3) zu Kern (6) liegt im Bereich von 1/20 bis 1/2
- das Verhältnis des Quotienten der Querschnittflächen von Kern, Qₖₑᵣₙ und Seele, Q_{Seele} zur Länge L_{Lichtleiter} des Lichtleiters, (Qₖₑᵣₙ/Q_{Seele})/L_{Lichtleiter} weist einen Wert im Bereich von 20 m⁻¹ bis 500 m⁻¹ auf.

7. Seitenemittierender Lichtleiter (1) gemäß einem der vorstehenden Ansprüche, **gekennzeichnet durch** zumindest eines der folgenden Merkmale:
- die durch die Biegung des Lichtleiters (1) verursachten zusätzlichen Lichtverluste bei einem Biegeradius des Lichtleiters (1) von 21 mm betragen weniger als das 0,1-fache der gesamten im Lichtleiter geführten Lichtintensität pro Wicklung des Lichtleiters (1),
- die durch die Biegung des Lichtleiters (1) verursachten Lichtverluste bei einem Biegeradius des Lichtleiters (1) von 12 mm betragen weniger als das 0,3-fache der gesamten im Lichtleiter geführten Lichtintensität pro Wicklung des Lichtleiters (1).

8. Seitenemittierender Lichtleiter (1) gemäß einem der vorstehenden Ansprüche, **dadurch gekennzeichnet, dass** die Seele (3) lichtstreuende Elemente aufweist, deren Konzentration höher als 10 Partikel pro Kubikmillimeter Seele (3) ist, oder derart, dass die auf die Seele (3) treffenden Lichtstrahlen von im Kern (6) geführten Licht im Mittel mehr als einmal gestreut werden.

9. Seitenemittierender Lichtleiter (1) gemäß einem der vorstehenden Ansprüche, **dadurch gekennzeichnet, dass** der Lichtleiter (1) dazu ausgebildet ist, das Spektrum des abgestrahlten Lichts gegenüber dem Spektrum des eingekoppelten Lichts zu verändern.

10. Seitenemittierender Lichtleiter (1) gemäß einem der vorstehenden Ansprüche, **dadurch gekennzeichnet, dass** zusätzlich zum zumindest einen Kern (6) in der Ummantelung (5) ein in Längsrichtung des Lichtleiters verlaufendes Funktionselement angeordnet ist.

11. Verfahren zur Herstellung eines seitenemittierenden Lichtleiters (1) gemäß einem der vorstehenden Ansprüche 1 bis 10, **dadurch gekennzeichnet, dass** der Kern (6) und die Ummantelung (5) durch Coextrusion transparenter Kunststoffe geformt werden.

12. Verfahren gemäß dem vorstehenden Anspruch, **gekennzeichnet durch** zumindest eines der Merkmale:
- die Coextrusion erfolgt um eine Seele (3) herum,
- die lichtstreuenden Elemente werden der Seele (3) bei der Coextrusion dem Kunststoff des Kerns (6) hinzugefügt
- Seele (3), Kern (6) und Ummantelung (5) werden in einem Extrusionsschritt durch Coextrusion dreier Kunststoffe geformt.

13. Lichtquelle (2) mit einem Lichtleiter (1) gemäß einem der vorstehenden Ansprüche 1 bis 10, sowie zumindest einem Lichtemitter (4), welcher an einem Ende (10, 11) optisch mit dem Kern (6) des Lichtleiters (1) gekoppelt ist, um Licht in den Kern (6) einzukoppeln.

14. Lichtquelle (2) gemäß dem vorstehenden Anspruch, bei welcher der seitenemittierende Lichtleiter (1) mit einem weiteren flexiblen Lichtleiter (21) verbunden ist, und wobei ein Lichtemitter (4) an den weiteren flexiblen Lichtleiter (21) gekoppelt ist, so dass das Licht des Lichtemitters (4) über den weiteren Lichtleiter (21) in den seitenemittierenden Lichtleiter (1) eingekoppelt und entlang des seitenemittierenden Lichtleiters (1) abgegeben wird.

15. Verwendung eines Lichtleiters (1) nach einem der Ansprüche 1 bis 10 oder einer Lichtquelle (2) gemäß einem der vorstehenden Ansprüche 13 oder 14 in einer medizintechnischen diagnostischen oder therapeutischen Vorrichtung.

## Claims

1. A side-emitting optical waveguide (1), comprising a core (6) with at least one inner core (3) extending therein, and a transparent cladding (5) surrounding the core (6), wherein said core (6) and said cladding (5) are formed from transparent plastics material, with the core (6) having a higher refractive index than the cladding (5), and with the inner core (3) being adapted to deflect light, in particular to reflect or scatter light, in order to scatter light that is carried in the optical waveguide and to emit it to the outside through the cladding (5); **characterized in that** the scattering length of the inner core (3) is at most twice the maximum cross dimension of the inner core (3), the scattering length being defined as the length at which, due to the scattering, the initial intensity of the light in the direction of irradiation has dropped to a factor of 1/e; and wherein the inner core (3) comprises light-scattering elements and extends centrally through the core (6), so that the light-scattering elements of the inner core (3) are arranged in a concentrated fashion in a discrete area within the core (6) at least partially or in sections thereof.

2. The side-emitting optical waveguide (1) according to the preceding claim, wherein the inner core (3) has a cross-sectional area, as measured in the direction perpendicular to the longitudinal extension of the optical waveguide (1), which is smaller by at least a factor of 4 than the cross-sectional area encompassed by the outer contour of the transparent cladding (5).

3. The side-emitting optical waveguide (1) according to any one of the preceding claims, **characterized in that** the inner core (3) has at least one of the following features:
- the inner core (3) comprises a cord or a wire;
- the inner core (3) has a diameter in the range from 10 µm to 1000 µm or a cross-sectional area in the range from 80 µm² to 0.8 mm²;
- the inner core (3) has varying characteristics radially across the cross section;
- the inner core has a multi-layered structure;
- the inner core comprises at least one electrical conductor or is defined by at least one electrical conductor.

4. The side-emitting optical waveguide (1) according to any one of the preceding claims, **characterized in that** the plastics materials of the cladding (5) and of the core (6) comprise a polymer blend.

5. The side-emitting optical waveguide (1) according to the preceding claim, comprising at least one of the following features:
- at least one of the polymers of the polymer blend is an aliphatic polyurethane;
- at least one of the polymers of the polymer blend forms a thermoplastic elastomer;
- one of the polymers of the polymer blend is a polymethyl methacrylate,
- one of the polymers of the polymer blend is a polycarbonate;
- at least one of the plastics materials of the cladding (5) and of the core (6) contains embedded polymer particles;
- the cladding (5) contains at least one additive, in particular selected from a group comprising a UV stabilizer, a flame retardant, an impact strength modifier or a combination thereof;
- the polymer blend contains polymethyl methacrylate and thermoplastic polyurethane;
- the polymer blend contains particles (20) with cross-linked PMMA;
- the plastics materials of both the core (6) and the cladding (5) are polymer blends including at least two identical polymer components with differently weighted percentages of the polymer components such that the refractive index of the cladding (5) is lower than the refractive index of the core (6).

6. The side-emitting optical waveguide (1) according to any one of the preceding claims, having at least one of the following features:
- the optical waveguide comprises a plurality of cores (6) which are surrounded by a common cladding (5);
- the optical waveguide (1) has a length ranging from 0.5 meters to 100 meters;
- the ratio of the cross-sectional areas of the inner core (3), Q_{inner_core}, and the core, Q_{core}, (Q_{inner_core}/Q_{core}) ranges from 2.5·10⁻³ to 0.25; or
- the ratio of the diameters of the inner core (3) to the core (6) ranges from 1/20 to 1/2;
- the ratio of the quotient of the cross-sectional areas of the core, Q_{core}, and the inner core, Q_{inner_core}, to the length L_{optical_waveguide} of the optical waveguide, (Q_{core}/Q_{inner_core})/L_{optical_waveguide} has a value in the range from 20 m⁻¹ to 500 m⁻¹.

7. The side-emitting optical waveguide (1) according to any one of the preceding claims, **characterized by** at least one of the following features:
- the additional light losses as caused by the bending of the optical waveguide (1) in the case of a bending radius of the optical waveguide (1) of 21 mm are less than 0.1 times the total light intensity carried in the optical waveguide per winding of the optical waveguide (1),
- the light losses as caused by the bending of the optical waveguide (1) in the case of a bending radius of the optical waveguide (1) of 12 mm are less than 0.3 times the total light intensity carried in the optical waveguide per winding of the optical waveguide (1).

8. The side-emitting optical waveguide (1) according to any one of the preceding claims, **characterized in that** the inner core (3) comprises light-scattering elements in a concentration of greater than 10 particles per cubic millimetre of the inner core (3), or such that the light rays of the light carried in the core (6) and impinging on the inner core (3) are scattered more than once on average.

9. The side-emitting optical waveguide (1) according to any one of the preceding claims, **characterized in that** the optical waveguide (1) is adapted to alter the spectrum of the emitted light compared to the spectrum of the injected light.

10. The side-emitting optical waveguide (1) according to any one of the preceding claims, **characterized in that**, in addition to the at least one core (6), a functional element is arranged within the cladding (5), which extends along the longitudinal extension of the optical waveguide.

11. A method for producing a side-emitting optical waveguide (1) according to any one of the preceding claims 1 to 10, **characterized in that** the core (6) and the cladding (5) are formed by coextrusion of transparent plastics materials.

12. The method according to the preceding claim, **characterized by** at least one of the following features:
- the coextrusion is made around an inner core (3);
- the light-scattering elements are added to the inner core (3) during the coextrusion to the plastics material of the core (6);
- inner core (3), core (6) and cladding (5) are formed in a single extrusion step by coextruding three plastics materials.

13. A light source (2) comprising an optical waveguide (1) according to any one of the preceding claims 1 to 10 and at least one light emitter (4) which is optically coupled to the core (6) of the optical waveguide (1) at one end (10, 11) thereof in order to inject light into the core (6).

14. The light source (2) according to the preceding claim, wherein the side-emitting optical waveguide (1) is coupled to a further flexible optical waveguide (21), and wherein a light emitter (4) is coupled to said further flexible optical waveguide (21), so that the light from the light emitter (4) is injected into the side-emitting optical waveguide (1) via the further optical waveguide (21) and is emitted along the side-emitting optical waveguide (1).

15. Use of an optical waveguide (1) according to any one of claims 1 to 10 or of a light source (2) according to any one of the preceding claims 13 or 14 in a medical diagnostic or therapeutic device.

## Revendications

1. Guide de lumière (1) à émission latérale, comprenant un coeur (6), dans lequel s'étend au moins une âme (3), ainsi qu'une enveloppe (5) transparente entourant le coeur (6), dans lequel le coeur (6) et l'enveloppe (5) sont formés d'une matière plastique transparente, dans lequel le coeur (6) présente un indice de réfraction plus élevé que l'enveloppe (5), et dans lequel l'âme (3) est réalisée de manière à dévier la lumière, en particulier à réfléchir la lumière ou à diffuser la lumière, afin de diffuser la lumière guidée dans le guide de lumière et de la distribuer vers l'extérieur à travers l'enveloppe (5), **caractérisé en ce que** la longueur de diffusion de l'âme (3) est au maximum deux fois plus grande que la dimension transversale maximale de l'âme (3), dans lequel la longueur de diffusion est définie comme la longueur pour laquelle l'intensité initiale de la lumière dans la direction d'irradiation est abaissée à un facteur 1/e par diffusion, et l'âme (3) comprend des éléments diffusant la lumière et s'étend de manière centrale dans le coeur (6), de sorte que les éléments diffusant la lumière de l'âme (3) sont disposés au moins en partie ou sur certaines sections de manière concentrée dans une zone discrète à l'intérieur du coeur (6).

2. Guide de lumière (1) à émission latérale selon la revendication précédente, pour lequel l'âme (3) présente une surface de section transversale mesurée dans la direction perpendiculaire à la direction longitudinale du guide de lumière (1), qui est plus petite d'au moins un facteur 4 que la surface de section transversale enfermée par le contour extérieur de l'enveloppe (5) transparente.

3. Guide de lumière (1) à émission latérale selon l'une quelconque des revendications précédentes, **caractérisé en ce que** l'âme (3) présente au moins l'une des caractéristiques suivantes :
- l'âme (3) comprend un câble ou un fil,
- l'âme (3) présente un diamètre dans la plage de 10 µm à 1000 µm ou une surface de section transversale dans la plage de 80 µm² à 0,8 mm².
- l'âme (3) présente dans la direction radiale de la section transversale une nature variable,
- l'âme possède une structure multicouche,
- l'âme contient au moins un conducteur électrique ou est formée par au moins un conducteur électrique.

4. Guide de lumière (1) à émission latérale selon l'une quelconque des revendications précédentes, **caractérisé en ce que** les matières plastiques de l'enveloppe (5) et du coeur (6) comprennent un mélange de polymères.

5. Guide de lumière à émission latérale (1) selon la revendication précédente, avec au moins l'une des caractéristiques suivantes :
- au moins l'un des polymères du mélange de polymères est un polyuréthane aliphatique,
- au moins l'un des polymères du mélange de polymères forme un élastomère thermoplastique,
- l'un des polymères du mélange de polymères est un polyméthacrylate de méthyle,
- l'un des polymères du mélange de polymères est un polycarbonate,
- au moins l'une des matières plastiques de l'enveloppe (5) et du coeur (6) contient des particules polymères enrobées
- l'enveloppe (5) contient au moins un granulat, en particulier choisi dans un groupe comprenant un stabilisant UV, un agent ignifuge, un modificateur de résistance aux chocs ou une combinaison de ceux-ci,
- le mélange de polymères contient du polyméthacrylate de méthyle et du polyuréthane thermoplastique,
- le mélange de polymères contient des particules (20) avec du PMMA réticulé,
- les matières plastiques aussi bien du coeur (6) que de l'enveloppe (5) sont des mélanges de polymères avec au moins deux composants polymères concordants, dans lequel les parts des composants polymères sont pondérées différemment, de sorte que l'indice de réfraction de l'enveloppe (5) est plus bas que l'indice de réfraction du coeur (6).

6. Guide de lumière (1) à émission latérale selon l'une quelconque des revendications précédentes, présentant au moins l'une des caractéristiques suivantes :
- le guide de lumière comprend plusieurs coeurs (6), qui sont entourés d'une enveloppe (5) commune,
- le guide de lumière (1) présente une longueur dans la plage de 0,5 mètre à 100 mètres,
- le rapport des surfaces de section transversale de l'âme (3), Qₛₑₑₗₑ et du coeur, Q_{Kern}, (Qₛₑₑₗₑ/Q_{Kern}) se situe dans la plage de 2,5•10⁻³ à 0,25, ou
- le rapport des diamètres de l'âme (3) au coeur (6) se situe dans la plage de 1/20 à 1/2
- le rapport du quotient des surfaces de section transversale du coeur, Q_{Kern} et de l'âme, Qₛₑₑₗₑ à la longueur L_{Lichtleiter} du guide de lumière, (Q_{Kern}/Qₛₑₑₗₑ)/L_{Lichtleiter} présente une valeur dans la plage de 20 m⁻¹ à 500 m⁻¹.

7. Guide de lumière (1) à émission latérale selon l'une quelconque des revendications précédentes, **caractérisé par** au moins l'une des caractéristiques suivantes :
- les pertes de lumière additionnelles provoquées par la courbure du guide de lumière (1) pour un rayon de courbure du guide de lumière (1) de 21 mm atteignent moins de 0,1 fois l'intensité de lumière totale guidée dans le guide de lumière par enroulement du guide de lumière (1),
- les pertes de lumière provoquées par la courbure du guide de lumière (1) pour un rayon de courbure du guide de lumière (1) de 12 mm atteignent moins de 0,3 fois l'intensité de lumière totale guidée dans le guide de lumière par enroulement du guide de lumière (1).

8. Guide de lumière (1) à émission latérale selon l'une quelconque des revendications précédentes, **caractérisé en ce que** l'âme (3) présente des éléments diffusant la lumière, dont la concentration est plus élevée que 10 particules par millimètre cube d'âme (3), ou de telle sorte que les faisceaux lumineux de la lumière guidée dans le coeur (6) heurtant l'âme (3) sont diffusés en moyenne plus d'une fois.

9. Guide de lumière (1) à émission latérale selon l'une quelconque des revendications précédentes, **caractérisé en ce que** le guide de lumière (1) est réalisé pour modifier le spectre de la lumière irradiée par rapport au spectre de la lumière injectée.

10. Guide de lumière à émission latérale (1) selon l'une quelconque des revendications précédentes, **caractérisé en ce qu'**en plus de l'au moins un coeur (6) un élément fonctionnel s'étendant dans la direction longitudinale du guide de lumière est disposé dans l'enveloppe (5).

11. Procédé pour la fabrication d'un guide de lumière (1) à émission latérale selon l'une quelconque des revendications précédentes 1 à 10, **caractérisé en ce que** le coeur (6) et l'enveloppe (5) sont façonnés par coextrusion de matières plastiques transparentes.

12. Procédé selon la revendication précédente, **caractérisé par** au moins l'une des caractéristiques :
- la coextrusion s'effectue autour d'une âme (3),
- les éléments diffusant la lumière sont ajoutés à l'âme (3) lors de la coextrusion de la matière plastique du coeur (6)
- l'âme (3), le coeur (6) et l'enveloppe (5) sont façonnés dans une étape d'extrusion par coextrusion de trois matières plastiques.

13. Source de lumière (2) avec un guide de lumière (1) selon l'une quelconque des revendications précédentes 1 à 10, ainsi qu'au moins un émetteur de lumière (4), lequel à une extrémité (10, 11) est couplé optiquement au coeur (6) du guide de lumière (1), afin d'injecter la lumière dans le coeur (6).

14. Source de lumière (2) selon la revendication précédente, pour laquelle le guide de lumière (1) à émission latérale est relié à un autre guide de lumière (21) flexible, et dans lequel un émetteur de lumière (4) est couplé à l'autre guide de lumière (21) flexible, de sorte que la lumière de l'émetteur de lumière (4) est injectée dans le guide de lumière (1) à émission latérale par l'intermédiaire de l'autre guide de lumière (21) et est distribuée le long du guide de lumière (1) à émission latérale.

15. Utilisation d'un guide de lumière (1) selon l'une quelconque des revendications 1 à 10 ou d'une source de lumière (2) selon l'une quelconque des revendications précédentes 13 ou 14 dans un dispositif diagnostique ou thérapeutique en technique médicale.
